# EUROPÄISCHE PATENTANMELDUNG

(11) **EP 1 281 503 A1**
(43) Veröffentlichungstag der Anmeldung: **05.02.2003**
(21) Anmeldenummer: 02011794.1
(22) Anmeldetag: 28.05.2002
(51) Int. Cl.: B29C 49/42, B65G 21/20, B65G 51/03

(54) **Vorrichtung zum Transport von Produkten**

(30) Priorität: 30.06.2001 DE 10131836
(71) Anmelder: SIG Corpoplast GmbH & Co. KG, 22145 Hamburg (DE)
(72) Erfinder: Esser, Peter, 73104 B-rtlingen (DE)
(74) Vertreter: Klickow, Hans-Henning

(57) **Zusammenfassung**

Die Vorrichtung dient zum Transport von Produkten aus einem thermoplastischen Material innerhalb einer Einrichtung zur Blasformung von Behältern aus dem thermoplastischen Material. Die Einrichtung zur Blasformung weist mindestens eine Blasstation mit mindestens einer Blasform auf, die aus mindestens zwei von Trägern gehalterten Blasformsegmenten ausgebildet ist sowie bei der Leitelemente das thermoplastische Material mindestens entlang eines Teiles eines zu durchlaufenden Transportweges positionieren. Mindestens ein Leitelement ist aus einem Trägermaterial und einer das Trägermaterial mindestens bereichsweise bedeckenden Beschichtung ausgebildet. Die Beschichtung besteht mindestens zu einem Teil aus mindestens einer keramischen Substanz.

## Beschreibung

Die Erfindung betrifft eine Vorrichtung zum Transport von Produkten aus einem thermoplastischen Material innerhalb einer Einrichtung zur Blasformung von Behältern aus dem thermoplastischen Material, wobei die Einrichtung zur Blasformung mindestens eine Blasstation mit mindestens einer Blasform aufweist, die aus mindestens zwei von Trägern gehalterten Blasformsegmenten ausgebildet ist und bei der Leitelemente das thermoplastische Material mindestens entlang eines Teiles eines zu durchlaufenden Transportweges positionieren.

Derartige Vorrichtungen werden insbesondere bei der Herstellung von blasgeformten Behältern eingesetzt, um einen mit der Durchführung des Blasvorganges koordinierten Materialtransport durchführen zu können.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Als Leitelemente für die Vorformlinge beziehungsweise die geblasenen Behälter werden in der Regel Schienen aus poliertem Stahl oder Elemente aus Kunststoff verwendet. Diese Materialien können jedoch noch nicht alle Anforderungen erfüllen, die sowohl an einen reibungsarmen Transport der Produkte als auch an eine lange Lebensdauer gestellt werden. Die Führungselemente aus Kunststoff beziehungsweise mit Beschichtungen aus Kunststoff weisen darüber hinaus den Nachteil auf, daß im Bereich von Übergangsstellen aufgrund von Temperaturschwankungen Längenunterschiede auftreten können, die einen optimalen Übergang von einem Segment zum anderen Segment nur in einem sehr engen Temperaturbereich gewährleisten.

Aufgabe der vorliegenden Erfindung ist es, eine Vorrichtung der einleitend genannten derart zu konstruieren, daß verbesserte Transporteigenschaften erreicht werden.

Diese Aufgabe wird erfindungsgemäß dadurch gelöst, daß mindestens ein Leitelement aus einem Trägermaterial und einer das Trägermaterial mindestens bereichsweise bedeckenden Beschichtung ausgebildet ist und daß die Beschichtung mindestens zu einem Teil aus mindestens einer keramischen Substanz besteht.

Die Verwendung einer thermischen Beschichtung ermöglicht es, sehr harte und damit auch verschleißfeste Oberflächen bereitzustellen und gleichzeitig eine sehr geringe Reibung zwischen dem zu transportierenden thermoplastischen Material und den Leitelementen zu erreichen. Darüber hinaus erweisen sich keramische Beschichtungen auch als sehr wenig verschmutzungsanfällig, so daß Beeinträchtigungen des Transportes des thermoplastischen Materials durch an den Leitelementen anhaftende Schmutzpartikel zumindest deutlich reduziert werden.

Eine Aufbringung der Beschichtung kann beispielsweise dadurch erfolgen, daß die Beschichtung auf das Trägermaterial aufgedampft ist.

Ebenfalls ist daran gedacht, daß die Beschichtung thermisch auf das Trägermaterial aufgebracht ist.

Besonders günstige Materialeigenschaften lassen sich dadurch erreichen, daß die Beschichtung mindestens zu einem Teil aus Zirkonoxid besteht.

Zur Unterstützung einer hohen mechanischen Belastbarkeit wird vorgeschlagen, daß das Trägermaterial mindestens bereichsweise aus Metall besteht.

Ein geringes Baugewicht kann dadurch erreicht werden, daß das Trägermaterial mindestens bereichsweise aus Kunststoff besteht.

Zur Unterstützung eines geringen Herstellungspreises wird vorgeschlagen, daß die Beschichtung das Trägermaterial mindestens in einem vorgesehenen Kontaktbereich mit dem thermoplastischen Material bedeckt.

Eine weitere Verringerung des Reibungskoeffizientens kann dadurch erfolgen, daß die Beschichtung eine Oberflächenstruktur aufweist.

Insbesondere ist zur Erreichung von Eigenschaften ähnlich zum sogenannten Lotusblumen-Effekt daran gedacht, daß die Oberflächenstruktur eine Strukturtiefe im Bereich von 1 bis 100 Nanometer aufweist.

Eine typische Anwendung besteht darin, daß das Leitelement zur Positionierung von Vorformlingen ausgebildet ist.

Ebenfalls erweist es sich als zweckmäßig, daß das Leitelement zur Positionierung von geblasenen Behältern ausgebildet ist.

Eine typische Anwendung besteht darin, daß das Leitelement im Bereich eines Rollensortierers angeordnet ist.

Ebenfalls ist es möglich, daß das Leitelement als eine Tragschiene im Bereich einer Vorformlingseingabe ausgebildet ist.

Eine weitere Anwendung besteht darin, daß das Leitelement als ein Gleitblech entlang des Transportweges des thermoplastischen Materials angeordnet ist.

Weiterhin ist es möglich, daß das Leitelement als ein Distanzelement ausgebildet ist.

Schließlich ist auch daran gedacht, daß das Leitelement im Bereich einer Ausgabestrecke für die geblasenen Behälter angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Prinzipdarstellung eines Vorformlings, der im Bereich einer Zuführschiene angeordnet ist,
- Fig. 6: eine Darstellung eines Vorformlings im Bereich eines Teiles eines Transportweges durch die Blasmaschine,
- Fig. 7: den Vorformling gemäß Fig. 6 im Bereich eines anderen Teiles des Transportweges,
- Fig. 8: den Vorformling gemäß Fig. 6 und Fig. 7 im Bereich eines weiteren Teiles des Transportweges,
- Fig. 9: eine geblasene Flasche im Bereich eines Ausgaberades,
- Fig. 10: eine geblasene Flasche im Bereich einer Ausgabestrecke und
- Fig. 11: einen Querschnitt durch ein Leitelement mit stark vergrößerter Schichtdicke des Beschichtungsmaterials.

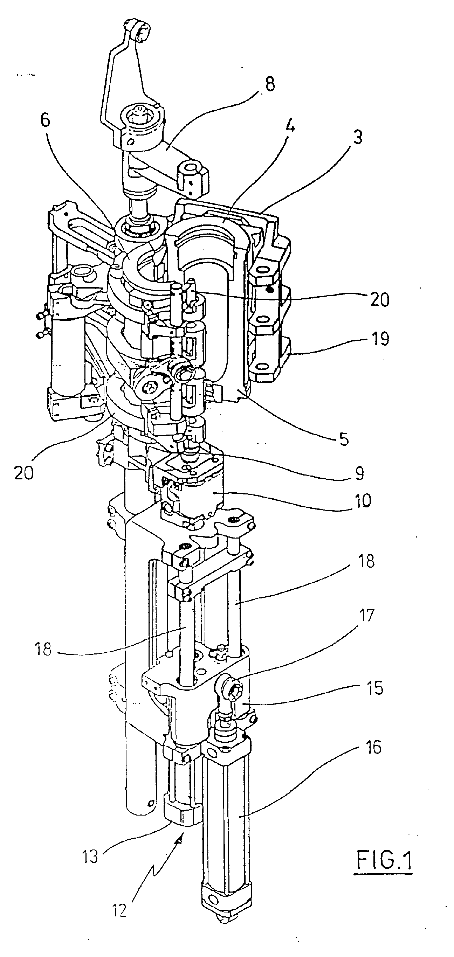

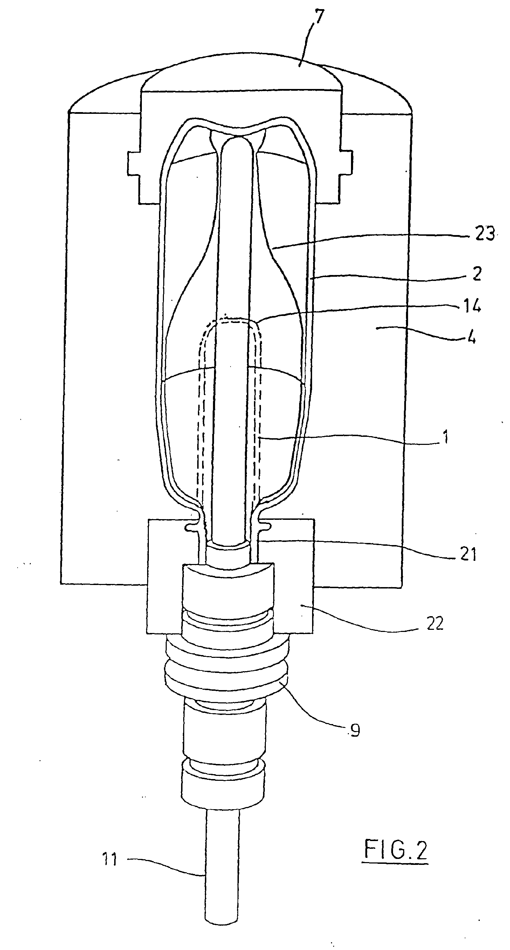

Eine Verwendung der Vorrichtung zum Transport von Produkten aus einem thermoplastischen Kunststoff kann beispielsweise zur Positionierung von Vorformlingen (1) und / oder Behältern (2) bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur. Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

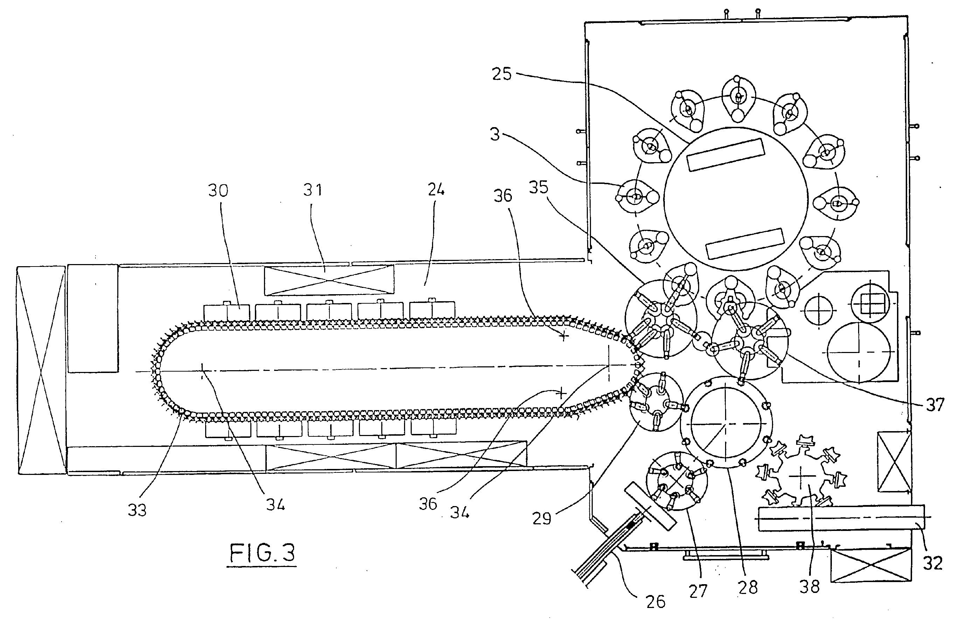

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

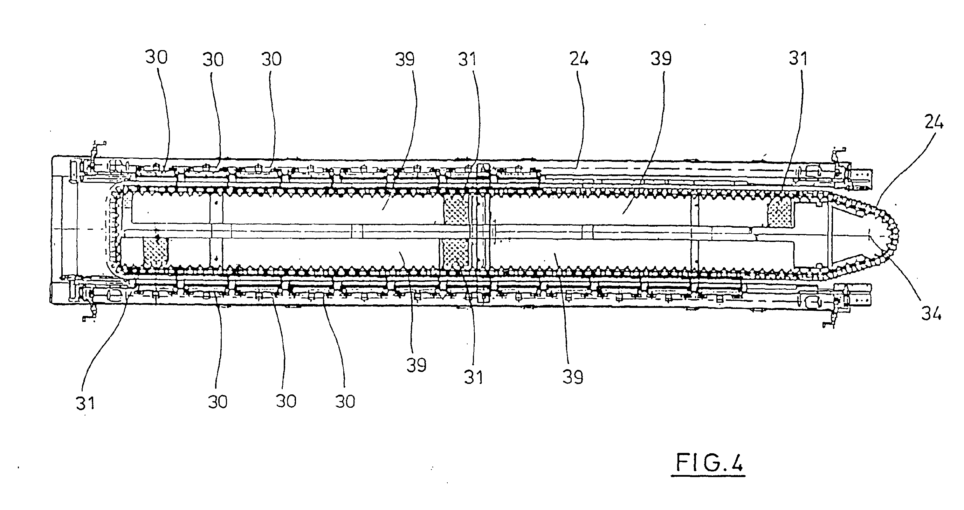

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

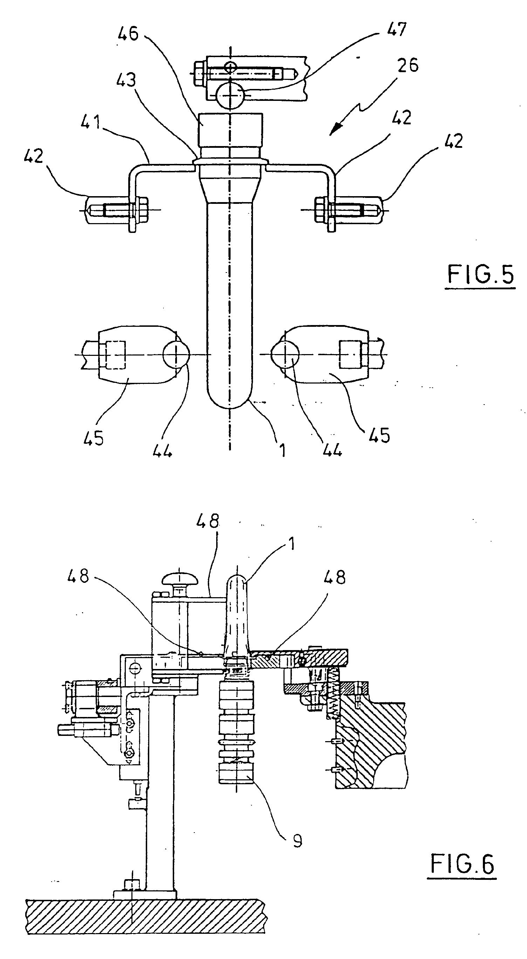

Fig. 5 zeigt den Vorformling (1) im Bereich der Vorformlingseingabe (26). Die Vorformlingseingabe (26) weist Tragschienen (41) auf, die relativ zur Horizontalen geneigt und von Befestigungselementen (42) gehaltert sind. Der Vorformling (1) liegt mit einem Stützring (43) seitlich auf den Tragschienen (41) auf. Grundsätzlich ist es auch denkbar, die Tragschienen (41) in geeignete Vertiefungen des Vorformlings (1) eingreifen zu lassen. Zur Vermeidung eines seitlichen Verkippens des Vorformlings (1) sind mit einem Abstand zu den Tragschienen (41) Stützschienen (44) angeordnet, die von Befestigungselementen (45) gehaltert sind. Zur Vermeidung eines Abhebens der Vorformlinge (1) von den Tragschienen (41) ist oberhalb eines Mündungsbereiches (46) des Vorformlings (1) eine Vertikalschiene (47) angeordnet.

Die Stützschienen (44) und die Vertikalschiene (47) können mit einem runden oder gerundeten Querschnitt versehen sein.

Die Tragschienen (41) sind vorzugsweise als ein Winkelprofil mit flachen Schenkeln realisiert. Bei der dargestellten Ausführungsform sind die Tragschienen (41), die Stützschienen (44) sowie die Vertikalschiene (47) im Bereich ihrer dem Vorformling (1) zugewandten Begrenzungsflächen mit einer keramischen Beschichtung versehen. Es erweist sich insbesondere die Verwendung von Zirkonoxid als vorteilhaft.

Fig. 6 zeigt den Transport des Vorformlings (1) innerhalb der Vorrichtung zur Blasformung. Der Vorformling (1) wird von einem Transportdorn (9) getragen und ist seitlich durch Distanzelemente (48) abgestützt. Die Distanzelemente (48) sind im Bereich ihrer dem Vorformling (1) zugewandten Ausdehnung mit einer keramischen Beschichtung versehen.

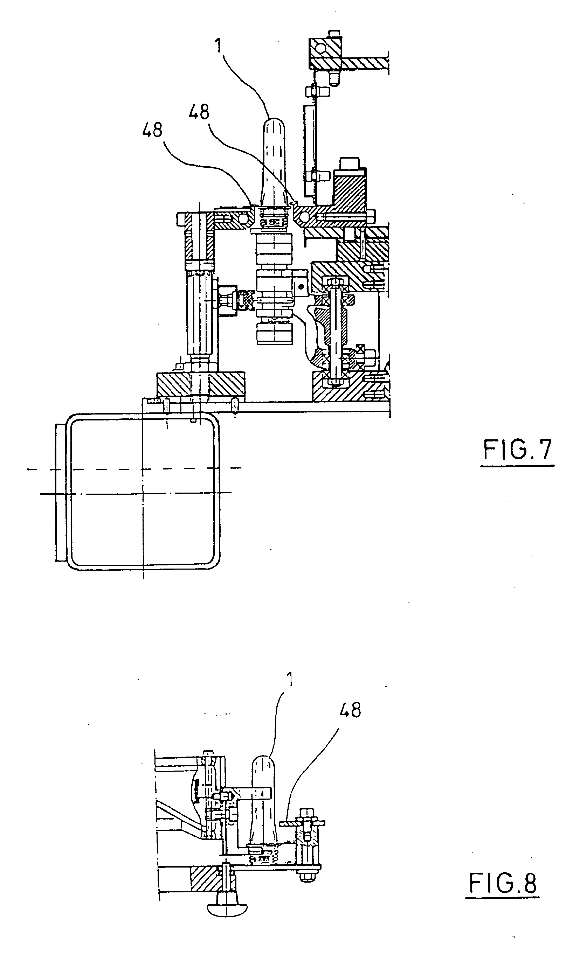

Fig. 7 zeigt den Vorformling (1) in einem anderen Bereich der Vorrichtung zur Blasverformung. Auch hier wird eine Seitenführung über Distanzelemente (48) vorgenommen, die mit einer keramischen Beschichtung versehen sind. Eine weitere Variante ist in Fig. 8 dargestellt, auch hier erfolgt eine Führung der Vorformlinge (1) mit Hilfe eines Distanzelementes (48), das eine keramische Beschichtung aufweist.

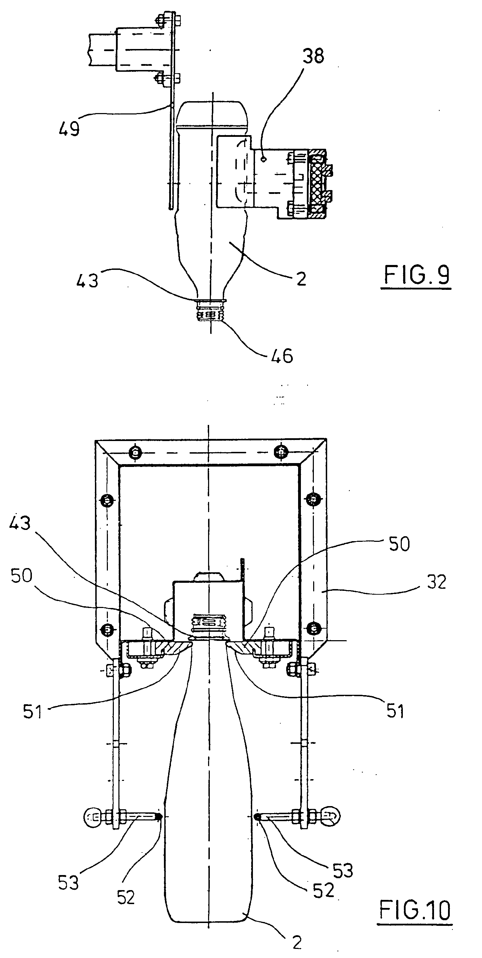

Fig. 9 zeigt einen bereits geblasenen Behälter (2) im Bereich des Ausgaberades (38). Der Behälter (2) wird hier in radialer Richtung außen von einem Gleitblech (49) abgestützt, das im Bereich seiner dem Behälter (2) zugewandten Ausdehnung mit einer keramischen Beschichtung versehen ist.

Fig. 10 zeigt eine geblasenen Behälter (2) im Bereich der Ausgabestrecke (32). Zur Positionierung des Behälters (2) werden hier Tragschienen (50) eingesetzt, die sich in Richtung auf den Behälter (2) verjüngen. Insbesondere ist daran gedacht, die Verjüngungen (51) derart auszubilden, daß im Bereich der dem Stützring (43) zugewandten Ausdehnung der Tragschienen (50) ebene Auflageflächen bereitgestellt sind.

Ähnlich wie beim Transport der Vorformlinge gemäß Fig. 5 werden auch im Bereich der Ausgabestrecke (32) mit einem Abstand zu den Tragschienen (50) Stützschienen (52) angeordnet, die mit einem runden oder gerundeten Profil versehen sein können. Eine Halterung der Stützschienen (52) erfolgt von Befestigungselementen (53).

Die Tragschienen (50) und die Befestigungselemente (53) sind im Bereich ihrer dem Behälter (2) zugewandten Ausdehnung mit einer Keramikbeschichtung versehen.

Die erläuterten keramischen Beschichtungen können im Bereich sämtlicher Leitelemente angeordnet werden, die in Verbindung mit den Vorformlingen (1) beziehungsweise dem Behälter (2) stehen. Insbesondere können derartige Leitelemente auch im Bereich eines mit der Vorformlingseingabe (26) in Verbindung stehenden Rollensortierers oder im Bereich eines Wenderades angeordnet sein, das die Vorformlingseingabe (26) mit dem Übergaberad verbindet. Ein derartiges Wenderad kann beispielsweise um eine Achse rotieren, die sich in Transportrichtung der Vorformlinge (1) erstreckt. Es ist aber ebenfalls möglich, eine derartige Rotationsachse quer zur Transportrichtung der Vorformlinge (1) zu orientieren.

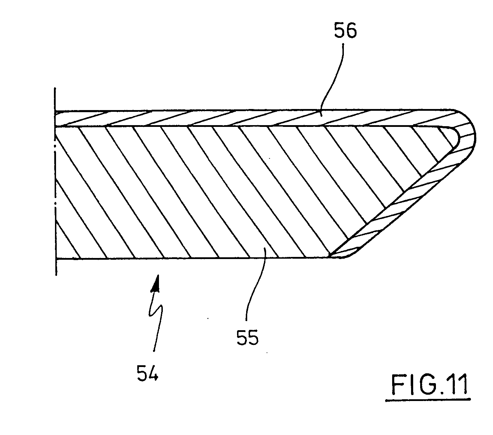

Fig. 11 zeigt eine teilweise Darstellung eines Querschnittes durch ein Leitelement (54), das aus einem Trägermaterial (55) und einer Beschichtung (56) besteht. Typischer Weise besteht das Trägermaterial (55) aus Metall.

Die keramische Beschichtung (56) wird typischer Weise mit einer Schichtdicke im Bereich von 10 Mikrometer bis 100 Mikrometer aufgebracht. Fig. 11 zeigt somit eine stark vergrößerte Darstellung der Schichtdicke der Beschichtung (56).

Alternativ zur Verwendung von reinem Zirkonoxid (Zr₂O₃) ist es auch möglich, mit Zusätzen stabilisiertes Zirkonoxid zu verwenden. Beispielsweise kann eine Stabilisierung mit Yttriumoxid (Y₂O₂), Magnesiumoxid (MgO) oder Aluminium-Magnesium-Anteilen erfolgen. Der Anteil des Stabilisators an der Gesamtsubstanz beträgt ca. 10%.

## Patentansprüche

1. Vorrichtung zum Transport von Produkten aus einem thermoplastischen Material innerhalb einer Einrichtung zur Blasformung von Behältern aus dem thermoplastischen Material, wobei die Einrichtung zur Blasformung mindestens eine Blasstation mit einer Blasform aufweist, die aus mindestens zwei von Trägern gehalterten Blasformsegmenten ausgebildet ist sowie bei der Leitelemente das thermoplastische Material mindestens entlang eines Teiles eines zu durchlaufenden Transportweges positionieren, **dadurch gekennzeichnet, daß** mindestens ein Leitelement (54) aus einem Trägermaterial (55) und einer das Trägermaterial (55) mindestens bereichsweise bedeckenden Beschichtung (56) ausgebildet ist und daß die Beschichtung (56) mindestens zu einem Teil aus mindestens einer keramischen Substanz besteht.

2. Vorrichtung nach Anspruch 1, **dadurch gekennzeichnet, daß** die Beschichtung (56) auf das Trägermaterial (55) aufgedampft ist.

3. Vorrichtung nach Anspruch 1, **dadurch gekennzeichnet, daß** die Beschichtung (56) keramisch auf das Trägermaterial (55) aufgebracht ist.

4. Vorrichtung nach einem der Ansprüche 1 bis 3, **dadurch gekennzeichnet, daß** die Beschichtung (56) mindestens zu einem Teil aus Zirkonoxid besteht.

5. Vorrichtung nach einem der Ansprüche 1 bis 4, **dadurch gekennzeichnet, daß** das Trägermaterial (55) mindestens bereichsweise aus Metall besteht.

6. Vorrichtung nach einem der Ansprüche 1 bis , **dadurch gekennzeichnet, daß** das Trägermaterial (55) mindestens bereichsweise aus Kunststoff besteht.

7. Vorrichtung nach einem der Ansprüche 1 bis 6, **dadurch gekennzeichnet, daß** die Beschichtung (56) das Trägermaterial (55) mindestens in einem vorgesehenen Kontaktbereich mit dem thermoplastischen Material bedeckt.

8. Vorrichtung nach einem der Ansprüche 1 bis 7, **dadurch gekennzeichnet, daß** die Beschichtung (56) eine Oberflächenstruktur aufweist.

9. Vorrichtung nach Anspruche 8, **dadurch gekennzeichnet, daß** die Oberflächenstruktur eine Strukturtiefe im Bereich von 1 bis 100 Nanometer aufweist.

10. Vorrichtung nach einem der Ansprüche 1 bis 9, **dadurch gekennzeichnet, daß** das Leitelement (54) zur Positionierung von Vorformlingen (1) ausgebildet ist.

11. Vorrichtung nach einem der Ansprüche 1 bis 9, **dadurch gekennzeichnet, daß** das Leitelement (54) zur Positionierung von geblasenen Behältern (2) ausgebildet ist.

12. Vorrichtung nach einem der Ansprüche 1 bis 11, **dadurch gekennzeichnet, daß** das Leitelement (54) im Bereich eines Rollensortierers angeordnet ist.

13. Vorrichtung nach einem der Ansprüche 1 bis 11, **dadurch gekennzeichnet, daß** das Leitelement (54) als eine Tragschiene (41) im Bereich einer Vorformlingseingabe (26) ausgebildet ist.

14. Vorrichtung nach einem der Ansprüche 1 bis 11, **dadurch gekennzeichnet, daß** das Leitelement (54) als Gleitblech (49) entlang des Transportweges des thermoplastischen Materials angeordnet ist.

15. Vorrichtung nach einem der Ansprüche 1 bis 11, **dadurch gekennzeichnet, daß** das Leitelement (54) als ein Distanzelement (48) ausgebildet ist.

16. Vorrichtung nach einem der Ansprüche 1 bis 11, **dadurch gekennzeichnet, daß** das Leitelement (54) im Bereich einer Ausgabestrecke (32) für die geblasenen Behälter (2) angeordnet ist.
